**Europäisches Patentamt**

**European Patent Office**

**Office européen des brevets**

(11) Veröffentlichungsnummer: **0 029 120**
**B1**

(12) **EUROPÄISCHE PATENTSCHRIFT**

(45) Veröffentlichungstag der Patentschrift:
**27.06.84**

(21) Anmeldenummer: **80106206.8**

(22) Anmeldetag: **11.10.80**

(51) Int. Cl.³: **B 60 C 19/00**

(54) Anordnung zur Verringerung des Reifenlärms.

(30) Priorität: **16.11.79 DE 2946273**

(43) Veröffentlichungstag der Anmeldung:
**27.05.81 Patentblatt 81/21**

(45) Bekanntmachung des Hinweises auf die Patenterteilung:
**27.06.84 Patentblatt 84/26**

(84) Benannte Vertragsstaaten:
**FR GB IT**

(56) Entgegenhaltungen:
**DE - A - 2 040 898**
**DE - A - 2 750 743**
**GB - A - 848 711**
**US - A - 2 290 121**
**US - A - 2 695 047**
**US - A - 3 866 977**
**US - A - 3 979 154**
**US - A - 3 993 356**

(73) Patentinhaber: **Messerschmitt-Bölkow-Blohm**
**Gesellschaft mit beschränkter Haftung,**
**Robert-Koch-Strasse, D-8012 Ottobrunn (DE)**

(72) Erfinder: **Bschorr, Oskar, Dipl.-Ing. Dr., Keplerstrasse 11,**
**D-8000 München 80 (DE)**

BUNDESDRUCKEREI BERLIN

**Beschreibung**

Die Erfindung bezieht sich auf eine Anordnung zur Verringerung des Reifenlärms von Fahrzeugen, wie Personen- und Lastkraftwagen etc., unter Verwendung von sich in den Innenraum des Reifens hineinragenden, schallabsorbierenden Wänden bzw. Bändern, die an den Wänden des Innenraums angeordnet sind.

Der Reifenlärm macht einen großen Teil des Verkehrslärms aus. Es hat sich gezeigt, daß bei etwa 50 km/h Fahrgeschwindigkeit Motor- und Reifenlärm ungefähr gleiche Schallemission aufweisen. Wird die Geschwindigkeit aber gesteigert, so ist im oberen Geschwindigkeitsbereich der Reifenlärm wesentlich stärker und wird zur dominanten Lärmquelle. Um diesen Lärm zu vermindern, ist bisher relativ wenig getan worden. In der Praxis hat sich zur Reduzierung dieser Lärmabstrahlung lediglich die Reifenausgestaltung mit ungleicher Profilteilung wenigstens etwas bewährt. Allerdings hat diese Maßnahme die Schallabstrahlung nicht reduziert, sondern lediglich die lästige Tonhaltigkeit beseitigt bzw. nahezu beseitigt. Maßnahmen zur Verringerung der Körperschallabstrahlung und des sogenannten »Air-pumping« zeigten sich bisher als wenig erfolgreich.

Nun wurden beispielsweise in der DE-OS 2 040 898, der US-PS 2 695 047 oder der GB-A-848 711 Anordnungen zur Verringerung des Reifenlärms offenbart, bei denen der Dämmstoff bzw. das Dämpfungsband direkt an der Innenwand des Reifens einvulkanisiert oder eingeklebt sind. Da aber durch diese Ausbildung eine Reibungsdämpfung der Schnelle nicht erzielbar ist, weil die Überlagerung der einfallenden Schallwelle an der Reifenwand eine Auslöschung der Schnelle ergibt und dafür eine Druckverdopplung im Reifen herbeiführt, ist eine Lärmreduzierung nicht zu erreichen.

Eigene Untersuchungen auf diesem Gebiet haben nun ergeben, daß für diesen Lärm ein anderer Lärmerzeugungsmechanismus maßgebend ist. Durch Irregularitäten im Abrollvorgang kommt es nämlich zu instationären Bewegungen der Reifenwand, die in bekannter Weise Lärm nach außen, aber gleichzeitig auch Lärm in den druckluftgefüllten Innenraum des Reifens abstrahlen. Infolge der höheren Luftdichte und der Raumresonanzen ist der Strahlungswiderstand viel größer und deshalb wird in den Reifeninnenraum auch wesentlich mehr Schallenergie übertragen, als nach außen hin. Hinzu kommt noch, daß aufgrund der geringen Innenabsorption eine weitere Pegelerhöhung gegeben ist. Dieser Innenlärm im Reifen wird durch die schwächer dämmenden Seitenflächen nach außen hin abgestrahlt. Auf diese Ursache ist beispielsweise der singende Ton bei Lkw-Reifen zurückzuführen.

Der vorliegenden Erfindung liegt nun die Aufgabe zugrunde, die Lärmabstrahlung von Reifen effektiv zu senken, ohne daß hierzu grundsätzlich besondere Umkonstruktionen erforderlich wären, d. h. es soll weitgehend eine Nachrüstung vorhandener Reifen bzw. dazugehörender Elemente möglich sein.

Diese Aufgabe wird in zuverlässiger Weise durch die im unabhängigen Anspruch vorgeschlagenen Maßnahmen gelöst. In den Unteransprüchen sind verschiedene vorteilhafte Ausgestaltungsmaßnahmen aufgeführt und in der nachfolgenden Beschreibung erläutert. In der Zeichnung sind diese Ausführungsbeispiele schematisch dargestellt. Es zeigt

Fig. 1 einen Querschnitt durch ein Ausführungsbeispiel eines Reifens mit Dämpfungseinlage;

Fig. 2 einen Querschnitt durch ein weiteres Ausführungsbeispiel;

Fig. 3 einen Querschnitt durch ein Ausführungsbeispiel, das die erfindungsgemäße Ausgestaltung der Reifenfelge zeigt;

Fig. 4 ein weiteres Ausführungsbeispiel einer Ausgestaltung der Reifenfelge;

Fig. 5 einen Längsschnitt durch einen Reifen mit einem weiteren Ausführungsbeispiel der Anordnung von Dämpfungseinlagen.

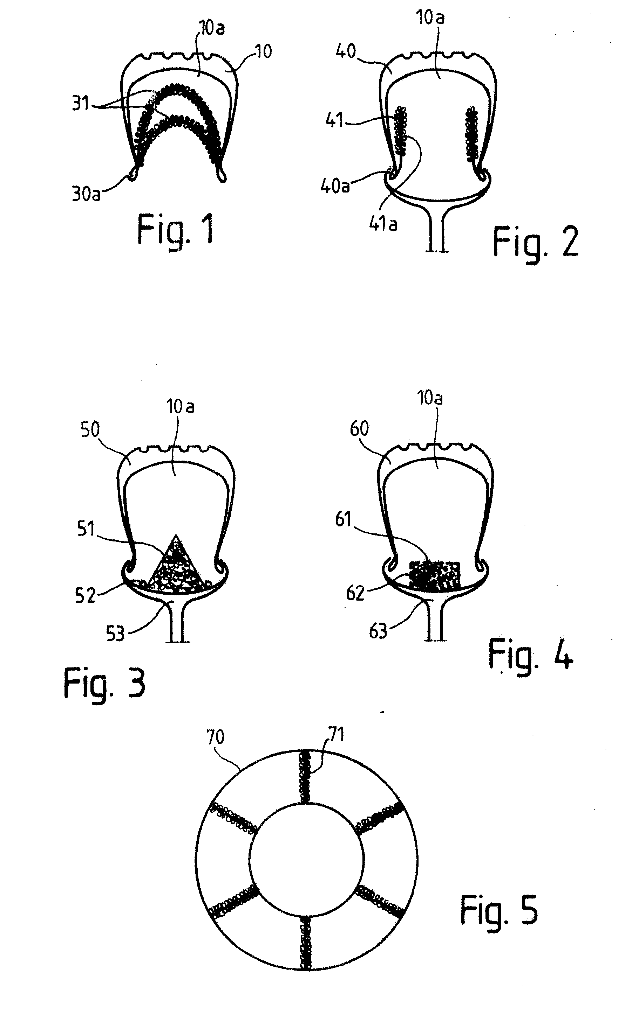

Die in den Fig. 1 bis 3 gezeigten Ausführungsbeispiele zeigen jeweils einen Querschnitt durch einen schlauchlosen Kraftfahrzeugreifen. In der Fig. 1 ist nun ein solcher Reifen 10 am Reifenwulst 30a mit einer oder mehreren Gewebebahnen 31 versehen, welche im Reifeninnern 10a umlaufend angeordnet sind und die mit schallabsorbierendem Material belegt sind.

Dieses vorgenannte Ausführungsbeispiel läßt ohne großen Aufwand auch bei bereits gebrauchten bzw. im Einsatz befindlichen Reifen eine nachträgliche Realisierung der vorgeschlagenen Maßnahmen zu. Die Verwirklichung des Erfindungsgedankens gleich mit der Herstellung der Reifen ist an einem Ausführungsbeispiel gemäß Fig. 2 gezeigt. Hier sind am Reifenschlauf mit Dämpfungsmittel belegte Seitenwände oder -scheiben 41 angeordnet. Diese Seitenscheiben können aus dem Gewebegummi des Reifenmaterials bestehen und werden vorzugsweise schon gleich bei der Reifenherstellung in einem Guß mit ausgebildet. Freilich ist es auch möglich, diese Ausgestaltungsform nachträglich anzubringen, beispielsweise durch Ankleben der vorbereiteten und belegten Seitenscheiben am Reifenschlauf 40a. Eine Stabilisierung der Seitenscheiben 41 erfolgt automatisch durch die Fahrbewegung.

In der Fig. 3 ist nun ein Ausführungsbeispiel gezeigt, wo der Erfindungsgedanke bzw. die erfindungsgemäß vorgeschlagenen Maßnahmen nicht am Reifen 50 selbst, sondern an der diesem Reifen zugeordneten Felde 53 angeordnet sind. Hier ist eine umlaufende Dämpfungseinlage 51 — vorzugsweise pyramidenförmig — angebracht. Diese Anbringung kann durch Halteringe 52 geschehen.

Ein ähnliches Beispiel zeigt die Fig. 4, allerdings ist hier der Dämpfungsstoff 61 in einem perforierten Gehäuse 62, oder in einem Drahtgehäuse untergebracht, wobei der Dämpfungsstoff nicht nur aus Kunststoff, sondern auch aus Stahlwolle oder Textilien bestehen kann.

In Fig. 5 ist gezeigt, wie in einem Reifen 70 schallabsorbierende luftdurchlässige Querwände 71 vorgesehen sind. Diese verteilen sich sternförmig über den ganzen Umfang des Reifens.

Einige der gezeigten Ausführungsbeispiele lassen sich auch bei sogenannten Schlauchreifen verwirklichen. Diesen Ausführungen kommt zugute, daß gegenüber der sogenannten Innenraumanregung durch mechanische Reifenschwingungen die Körperschallübertragung über die Felge eine untergeordnete Rolle spielt. Aber auch hier kann noch durch Anbringung eines Antidröhnbelages auf der Felde oder Anordnung von Schwingungsabsorbern Abhilfe geschaffen werden.

**Patentansprüche**

1. Anordnung zur Verringerung des Reifenlärms von Fahrzeugen unter Verwendung von sich in den Innenraum des Reifens hineinragenden, schallabsorbierenden Wänden bzw. Bändern, die an den Wänden des Innenraums angeordnet sind, dadurch gekennzeichnet, daß diese Wände bzw. Bänder (31, 41, 51) auf dem Reifenwulst (30a, 40a) oder der Felge (53, 63) befestigt sind und aus einem mit Dämpfungsmaterial belegten Textilmaterial ausgebildet sind.

2. Anordnung nach Anspruch 1, dadurch gekennzeichnet, daß ein oder mehrere mit schallabsorbierendem Material belegte Bänder (31) umlaufend am Reifenwulst (30a) angeordnet sind.

3. Anordnung nach Anspruch 1, dadurch gekennzeichnet, daß die schallabsorbierenden Wände (41) als Seitenscheiben, die in den Reifeninnenraum (10a) ragen, ausgebildet sind.

4. Anordnung nach Anspruch 1, dadurch gekennzeichnet, daß das schallabsorbierende Band (51) als umlaufende pyramidenförmige Dämpfungseinlage ausgebildet und mittels Halteringe (52) an der Felge (53) befestigt ist.

5. Anordnung nach Anspruch 1, dadurch gekennzeichnet, daß das schallabsorbierende Band als dem Dämpfungsstoff (61) umhüllendes perforiertes oder aus Draht gebildetes Gehäuse (62) ausgebildet ist.

6. Anordnung nach Anspruch 1, dadurch gekennzeichnet, daß die schallabsorbierenden Wände (71) als über den Reifen (70) sternförmig verteilte Querwände (71) ausgebildet sind.

**Claims**

1. An arrangement for reducing tyre noise of vehicles using sound-absorbing walls or bands which extend into the interior of the tyre and which are arranged on the walls of the interior, characterized in that these walls or bands (31, 41, 51) are fastened on the tyre bead (30a, 40a) or the rim (53, 63) and are made of a textile material which is covered with damping material.

2. An arrangement according to claim 1, characterized in that one or more bands (31) covered with sound-absorbing material are arranged in an encircling manner on the tyre bead (30a).

3. An arrangement according to claim 1, characterized in that the sound-absorbing walls (41) are side discs or washers which project into the tyre interior (10a).

4. An arrangement according to claim 1, characterized in that the sound-absorbing band (51) is an encircling pyramidal damping insert and is fastened to the rim (53) by means of retaining rings (52).

5. An arrangement according to claim 1, characterized in that the sound-absorbing band is a perforated housing (62), or one which is formed from wire, which envelopes the damping material (61).

6. An arrangement according to claim 1, characterized in that the sound-absorbing walls (71) are transverse walls or partitions (71) which are distributed in a star-shaped manner over the tyre (70).

**Revendications**

1. Dispositif permettant de réduire le bruit des pneus des véhicules en utilisant des parois ou bandes insonorisantes qui sont disposées sur les parois délimitant l'espace intérieur des pneus et font saillie dans cet espace intérieur, caractérisé par le fait que ces parois ou bandes (31, 41, 51) sont fixées sur le talon (30a, 40a) du pneu ou sur la jante (53, 63) et qu'elles sont constituées d'une matière textile garnie d'une substance atténuante.

2. Dispositif selon la revendication 1, caractérisé par le fait qu'une ou plusieurs bandes (31) recouvertes de matière insonorisante sont disposées sur le talon (30a) du pneu sur toute la circonférence du pneu.

3. Dispositif selon la revendication 1, caractérise par le fait que les parois insonorisantes (41) sont conçue sous forme de disques latéraux faisant saillie dans l'espace intérieur (10a) du pneu.

4. Dispositif selon la revendication 1, caractérisé par le fait que la bande insonorisante (51) est conçue sous forme de garniture intérieure atténuante circonférentielle de forme pyramidale qui est fixée sur la jante (53) par des anneaux de maitien (52).

5. Dispositif selon la revendication 1, caractérisé par le fait que la bande insonorisante est conçue sous la forme d'une enveloppe (62) perforée ou constituée de fils métalliques, entourant la substance atténuante (61).

6. Dispositif selon la revendication 1, caractérisé par le fait que les parois insonorisantes (71) sont constituées de parois transversales (71) réparties en form d'étoile sur tout le pneu (70).

Fig. 1

Fig. 2

Fig. 3

Fig. 4

Fig. 5